# EUROPEAN PATENT APPLICATION

(11) **EP 2 221 408 A1**
(43) Date of publication of application: **25.08.2010**
(21) Application number: 09169279.8
(22) Date of filing: 02.09.2009
(51) Int. Cl.: D04C 3/48, D04C 1/00

(54) **Yarn layer forming apparatus, yarn layer forming method, and method of manufacturing fiber-reinforced member**

(30) Priority: 03.09.2008 JP 2008226197
(71) Applicant: Toyota Jidosha Kabushiki Kaisha, Toyota-shi, Aichi-ken, 471-8571 (JP); Kabushiki Kaisha Toyota Jidoshokki, Kariya-shi, Aichi 448-8671 (JP)
(72) Inventor: Inazawa, Koichi, Aichi-ken 471-8571 (JP); Hori, Fujio, Aichi-ken 448-8671 (JP)
(74) Representative: Albutt, Anthony John

(57) **Abstract**

A yarn layer forming apparatus (100) includes: an annular braider (30) that supplies braider yarn (S3); annular first supply means (10) that supplies first yarn (S1); annular second supply means (20) that supplies second yarn (S2); and actuating means (40) that moves a mandrel (M). At least one of the first supply means and the second supply means is rotatable. A layer structure of yarn layers is formed on a peripheral surface of the mandrel (M). The layer structure of yarn layers includes at least yarn arrangement layers formed respectively by the first and second supply means and a woven layer formed by the braider.

## Description

### BACKGROUND OF THE INVENTION

### 1. Field of the Invention

The invention relates to a yarn layer forming apparatus and yarn layer forming method that form multiple yarn layers by stacking the multiple yarn layers, for example, on a peripheral surface of a long mandrel, and further to a method of manufacturing a fiber-reinforced member using an intermediate element formed by the yarn layer forming method.

### 2. Description of the Related Art

In recent vehicle development, safety, weight reduction, and environmental impact reduction are significant challenges than ever before. For hybrid vehicles, electric vehicles, and the like, that currently become the focus of attention, a fiber-reinforced member is applied to various components of the vehicles. The fiber-reinforced member is able to satisfy both rigidity that can ensure safety and weight reduction that leads to improvement of fuel economy. Furthermore, research of application of the fiber-reinforced member has been pursued. For example, a vehicle component to which the fiber-reinforced member is applied may include a curved long roof side rail (A pillar, C pillar, or the like), a propeller shaft, and the like.

The fiber-reinforced member (FRP), for example, includes a carbon fiber-reinforced plastic member (CFRP) and a glass fiber-reinforced plastic member (GFRP). These fiber-reinforced members are formed as FRP members having a light weight and a high strength (a high flexural strength, a torsional strength, and a shearing strength). To form the FRP members, fiber yarn, such as carbon fiber and glass fiber, having a predetermined tensile strength is used, and longitudinal yarn that extends in the longitudinal direction of a metal or resin mandrel on the peripheral surface of the mandrel and oblique yarn that is inclined at a predetermined angle with respect to the longitudinal direction are woven together to form a layer of woven fabric. Then, the mandrel with the layer of woven fabric is placed in a mold die, and injection molding, typically an RTM method, is carried out to impregnate and cure resin on the mandrel.

Incidentally, a method according to a related art uses a braider for forming the woven fabric. A public technique for forming the woven fabric of an FRP member using a braider is, for example, described in Japanese Patent Application Publication No. 9-132844 (JP-A-9-132844), Japanese Patent Application Publication No. 2005-219285 (JP-A-2005-219285) and Japanese Patent Application Publication No. 2006-28678 (JP-A-2006-28678).

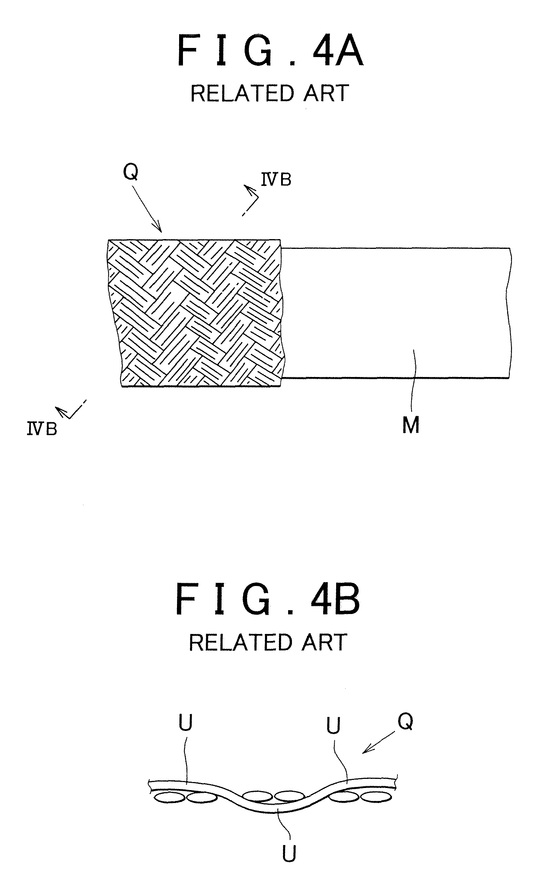

However, when the braider is used to form a woven fabric on the peripheral surface of the mandrel, waviness due to the woven fabric (or meandering due to intersections of yarns) occurs. This will be described with reference to FIG. 4A and FIG. 4B that is a cross-sectional view taken along the line IVB-IVB in FIG. 4A. In a woven layer Q shown in FIG. 4A, into which fiber yarn is woven, formed on the peripheral surface of the mandrel by the braider, waviness frequently occurs between intersecting fiber yarns, as shown in the cross-sectional view of FIG. 4B. According to the inventors, and the like, it has been found that, in the FRP member, stress concentrates on the wavy portion in the woven fabric of fiber yarn, and the wavy portion forms a weak portion in terms of strength.

### SUMMARY OF THE INVENTION

The invention provides a yarn layer forming apparatus and yarn layer forming method that are able to form a layer of fiber yarn on mandrels having various linear shapes and various cross-sectional shapes while preventing arrangement of fiber yarn, formed on the peripheral surfaces of the mandrels, from losing without forming waviness in fiber yarn that constitutes a fiber-reinforced member, and a method of manufacturing the fiber-reinforced member.

A first aspect of the invention provides a yarn layer forming apparatus. The yarn layer forming apparatus includes: an annular braider that supplies braider yarn; annular first supply means that is arranged at a distance from the braider and that supplies first yarn; annular second supply means that is arranged at a distance from the first supply means and that supplies second yarn; and actuating means that moves a mandrel inside the braider and inside the first and second supply means, wherein at least one of the first supply means and the second supply means is rotatable, rotation of the at least any one of the first supply means and the second supply means and movement of the mandrel are controlled to form a layer structure of yarn layers on a peripheral surface of the mandrel, wherein the layer structure of yarn layers includes at least first and second yarn arrangement layers formed respectively by the first supply means and the second supply means and a woven layer formed by the braider.

The yarn layer forming apparatus according to the first aspect of the invention is formed of a combination of a braider and two supply means. The yarn layer forming apparatus may form a first yarn arrangement layer formed of first yarn, in which yarn made of carbon fiber, glass fiber, or the like, is aligned in a predetermined direction (an axial direction (longitudinal direction) of a mandrel or a direction inclined with respect to the axial direction) on a peripheral surface of the mandrel in a state where one of the supply means is stopped or rotated, and may form a second yarn arrangement layer formed of second yarn to be formed on the first yarn arrangement layer in a state where the other one of the supply means is stopped or rotated, and, furthermore, the braider may be operated to form a woven layer formed of braider yarn.

Here, the yarn arrangement layers each are not woven fiber yarn like braider yarn but a layer in which fiber yarn is aligned in a predetermined direction. Thus, waviness as in the case of a woven layer does not occur.

However, when only yarn arrangement layers are formed on the peripheral surface of a mandrel, or the like, particularly having a curved shape, the yarn arrangement layers are misaligned, and it is difficult to maintain the positions of the yarn arrangement layers when they were formed. Therefore, for example, the peripheral surface of the two yarn arrangement layers is surrounded by a woven layer formed by the braider to make it possible to prevent a misalignment of the positions of the yarn arrangement layers.

A combination of fiber directions of the yarn arrangement layers on the mandrel is not specifically limited. An example of the combination may be a combination of a positive 45 degree direction and a negative 45 degree direction with respect to the axial direction of the mandrel, a combination in which one of the fiber directions is the positive 45 degree direction and the other one of the fiber directions is a 0 degree direction (axial direction), a combination in which both are 0 degree directions (both are axial directions), or the like.

Note that, when the yarn arrangement layer aligned in the 0 degree direction is formed, only by stopping (not rotating) the supply means, fiber yarn is drawn out from the bobbins of the supply mean, which is not rotating, in accordance with the movement of the mandrel, and then the fiber yarn is arranged on the peripheral surface of the mandrel in the 0 degree direction.

With the yarn layer forming apparatus according to the first aspect of the invention, it is possible to form multiple yarn arrangement layers having no waviness and a woven layer that prevents a misalignment of the yarn arrangement layers on the peripheral surface of a mandrel on top of one another by an extremely simple apparatus formed of just a combination of a plurality of supply means and a braider. In addition, the above method does not wind yarn on peripheral surface of the mandrel while rotating the mandrel unlike a filament winding method. Therefore, even in the case of a curved mandrel or, further, in the case where the cross-sectional shape of the mandrel varies, it is possible to easily form a fiber yarn layer on the peripheral surface of the mandrel with high accuracy.

In addition, a second aspect of the invention provides a yarn layer forming method. The yarn layer forming method uses a yarn layer forming apparatus that includes an annular braider that supplies braider yarn; annular first supply means that is arranged at a distance from the braider and that supplies first yarn; annular second supply means that is arranged at a distance from the first supply means and that supplies second yarn; and actuating means that moves a mandrel inside the braider and inside the first and second supply means, wherein at least one of the first supply means and the second supply means is rotatable, whereby multiple yarn layers are formed on a peripheral surface of a mandrel. The yarn layer forming method includes: performing a first step of stopping or rotating the first supply means while moving the mandrel by the actuator to arrange the first yarn on the peripheral surface of the mandrel in an axial direction of the mandrel or in a direction inclined with respect to the axial direction to form a first yarn arrangement layer; performing a second step of stopping or rotating the second supply means to arrange the second yarn on the peripheral surface of the mandrel in the axial direction of the mandrel or in a direction inclined with respect to the axial direction to form a second yarn arrangement layer on the first yarn arrangement layer; and a third step of driving the braider to form a woven layer on the second yarn arrangement layer.

The yarn layer forming method according to the second aspect of the invention uses the above described yarn layer forming apparatus to form a layer structure, formed of multiple yarn arrangement layers and a woven layer, on the peripheral surface of a mandrel. With the above forming method, it is possible to manufacture a member that includes a plurality of layer structures, each of which is formed of first and second yarn arrangement layers and a woven layer, in response to required strength characteristics. For example, when the first step in which the first yarn arrangement layer is formed by the first supply means, the second step in which the second yarn arrangement layer is formed by the second supply means, and the third step in which the woven layer is formed by the braider are regarded as one set, it is possible to form a further multilayer structure by performing two or more sets. Note that the angle of each yarn arrangement layer may be varied set by set.

With the yarn layer forming method according to the second aspect of the invention, even when the mandrel has a curved shape or has a complex cross-sectional shape or the shape of the mandrel varies, it is possible to easily form yarn arrangement layers on the peripheral surface of the mandrel without waviness by the supply means that rotate or do not rotate. In addition, the woven layer is formed by the braider on the peripheral surface of the yarn arrangement layers to make it possible to press the yarn arrangement layers from the outside. This can effectively prevent a misalignment of the yarn arrangement layers.

Furthermore, a third aspect of the invention provides a method of manufacturing a fiber-reinforced member. The method includes: manufacturing an intermediate element that is formed of multiple yarn layers formed on a peripheral surface of a mandrel by the yarn layer forming method; and placing the intermediate element in a mold die and then undergoing injection molding to manufacture the fiber-reinforced member. Here, the injection molding means not only typical injection molding but also includes an RTM method, an injection compression method, and the like.

In addition, it is applicable that, in the final molded fiber-reinforced member, the center mandrel is left as a component, or, for example, a water-soluble mandrel is used and then the mandrel is immersed in a water bath after injection molding to dissolve the mandrel to thereby form a fiber-reinforced member that is only formed of a woven layer formed of a cured resin.

As can be understood from the above description, with the yarn layer forming apparatus according to the aspect of the invention and the yarn layer forming method that uses the yarn layer forming apparatus, it is possible to form yarn arrangement layers, having no waviness, and a woven layer, that maintains the arrangement by pressing the yarn arrangement layers from the outside, on the peripheral surface of a mandrel irrespective of the linear shape and/or cross-sectional shape (complexity, variation, or the like) of the mandrel. The intermediate element formed by the yarn layer forming method is subjected to injection molding in a mold die to thereby make it possible to obtain a high-quality fiber-reinforced member (fiber-reinforced plastic member: FRP member) that has high strength characteristics (bending strength, torsional strength, shearing strength, and the like).

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1A is a side view that schematically illustrates a yarn layer forming apparatus according to an embodiment of the invention, and FIG. 1B is a cross-sectional view that is taken along the line IB-IB in FIG. 1A;
FIG. 2 is a perspective view that illustrates a braider in detail in the yarn layer forming apparatus;
FIG. 3A and FIG. 3B are schematic views that illustrate embodiments of a layer structure of yarn arrangement layers and a woven layer that are formed on a peripheral surface of a mandrel; and
FIG. 4A is a view that illustrates a state of a fiber-reinforced member according to a related art in which a woven layer is formed on a peripheral surface of a mandrel before being impregnated with resin, and FIG. 4B is a cross-sectional view taken along the line IVB-IVB in FIG. 4A.

### DETAILED DESCRIPTION OF EMBODIMENTS

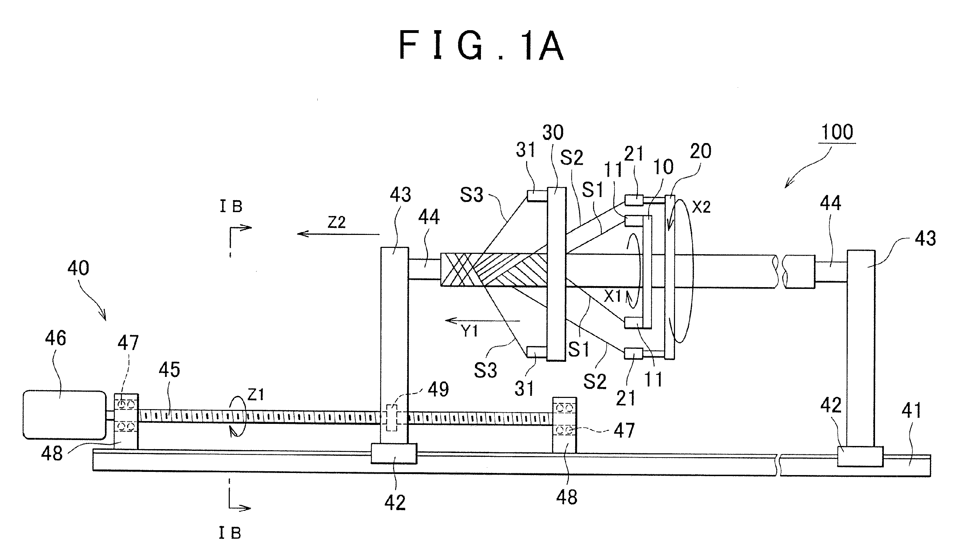

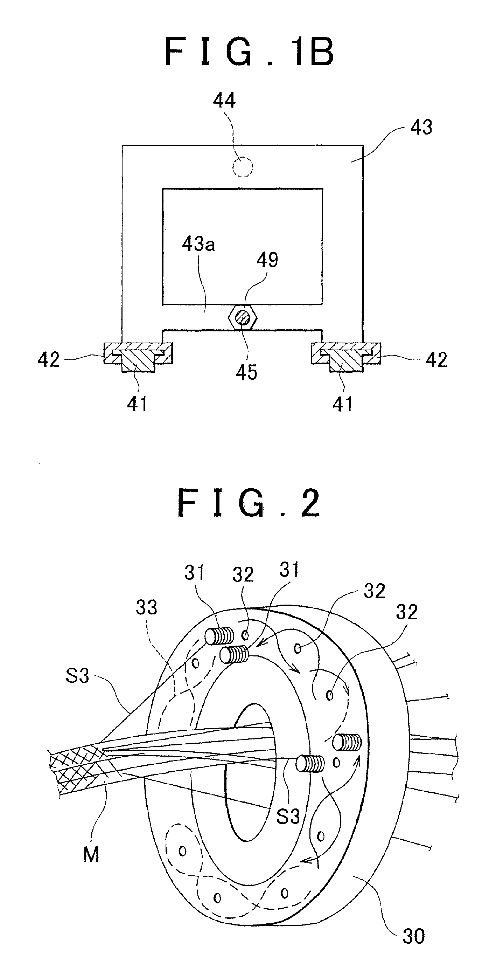

Hereinafter, an embodiment of the invention will be described with reference to the accompanying drawings. FIG 1A is a side view that schematically illustrates a yarn layer forming apparatus according to the embodiment of the invention, and FIG. 1B is a cross-sectional view that is taken along the line IB-IB in FIG. 1A. The yarn layer forming apparatus 100 mainly includes an annular braider 30, an annular first supply member 10, an annular second supply member 20, and an actuator 40. The first supply member 10 is located at a distance from the braider 30. The second supply member 20 is located at a distance from the first supply member 10. The actuator 40 moves a mandrel M inside these annular components.

This will be described with reference to FIG. 2 that illustrates the braider 30 further in detail. Many gears are installed inside the annular braider 30 in the circumferential direction. A bobbin movement groove 33 is formed in a figure-of-eight meander shape so as to avoid gear rotary shafts 32. A plurality of bobbins 31, around which braider yarn S3 is wound, are moved along the movement groove 33 to form a woven layer on a peripheral surface of the mandrel M.

Referring back to FIG 1A, the annular first supply member 10 includes a plurality of bobbins 11 that are fixedly arranged in the circumferential direction. Carbon fiber yarn is wound around each of the plurality of bobbins 11. Similarly, the annular second supply member 20 includes a plurality of bobbins 21 that are fixedly arranged in the circumferential direction. Carbon fiber yarn is wound around each of the plurality of bobbins 21. Note that the first supply member 10, the second supply member 20 and the braider 30 each have a specific servo motor (not shown). The servo motors are operated to desirably control the rotational speeds and rotation timings (start rotation, stop rotation, and the like) of the supply members and gears.

The outer diameter of the first supply member 10 is smaller than the outer diameter of the second supply member 20. As shown in the drawing, when the mandrel M moves in the arrow Y1 direction, the inner side first supply member 10 initially rotates in the arrow X1 direction to form a first yarn arrangement layer formed of carbon fiber yarn arranged on the peripheral surface of the mandrel M, and, subsequently, the outer side second supply member 20 rotates in the arrow X2 direction to form a second yarn arrangement layer on the first yarn arrangement layer.

Note that in the illustrated example, the rotation direction of the first supply member 10 is reverse to the rotation direction of the second supply member 20; however, both the rotation directions may be controlled in the same direction or, in some cases, rotation of any one of the supply members may be stopped or both supply members may be stopped. By stopping the supply members while the mandrel M is moved, a yarn arrangement layer is formed on the peripheral surface of the mandrel M so as to be aligned in the axial direction of the mandrel M.

Many associated gears are installed in the braider in the circumferential direction, and a bobbin movement groove is further formed in the circumferential direction so as to avoid rotary shafts of the gears. Bobbins move along the movement groove by rotations of the gears while supplying braider yarn to form a woven layer on the peripheral surface of the mandrel that passes through the inside of the braider.

On the other hand, each of the annular supply means is, for example, annular in shape, and includes a rotary element (supply member) and an actuator, such as a servo motor. The rotary element has a plurality of non-movable bobbins in the circumferential direction. The actuator rotates the rotary element. Then, the supply means are rotated to form yarn arrangement layers on the peripheral surface of the mandrel that passes through the inside of the annular components.

In addition, the two supply means (first supply means and second supply means) each are able to selectively rotate in a forward direction or in a reverse direction independently. Thus, the travel speed of the mandrel by the actuator and the rotational speeds of the supply means are desirably controlled to make it possible to desirably adjust the inclination angle (angle with respect to the axial direction) of each yarn arrangement layer with respect to the peripheral surface of the mandrel.

Here, the mandrel used may be a resin material, such as an ABS resin (acrylonitrile butadiene styrene resin copolymer synthetic resin) having a light weight and a high strength or may be a metal having a high strength.

The supply members are rotated while the mandrel M is moved to form a yarn arrangement layer formed of carbon fiber yarn that is aligned obliquely with respect to the axial direction of the mandrel M. Thus, the yarn arrangement layer mainly gives torsional rigidity to a fiber-reinforced member (CFRP member), which is a final molded product.

In contrast, the supply member is stopped while the mandrel M is moved to form a yarn arrangement layer formed of carbon fiber yarn that is aligned in the axial direction of the mandrel M. Thus, the yarn arrangement layer mainly gives bending rigidity and tensile rigidity to the CFRP member.

The actuator 40 that moves the mandrel M includes two gate-like frames 43 (see FIG. 1B). The gate-like frames 43 are respectively upright on slide guides 42 that move along two rails 41, and straddle between the rails 41. The actuator 40 is formed of a screw shaft 45, a servo motor 46 and two gate-like frames 48. A nut 49 is attached to a middle rail 43a of one of the gate-like frames 43, and moves along the screw shaft 45. The servo motor 46 drives the screw shaft 45 for rotation. The gate-like frames 48 rotatably support the screw shaft 45 by bearing mechanisms 47.

The mandrel M is supported by holders 44 attached to the gate-like frames 43. As the screw shaft 45 rotates (in the Z1 direction) with the rotation of the servo motor 46, the nut 49 and one of the gate-like frames 43 move along the rails 41 (in the Z2 direction), and the other one of the gate-like frames 43 also moves along the rails 41 via the mandrel M.

In addition, as shown in FIG. 1B, the nut 49 and the screw shaft 45 are located at the center of the middle rail 43a arranged at the center lower portion of the gate-like frame 43, and is arranged at a distance from the rails 41.

With the illustrated actuator 40, the mandrel M is able to smoothly move along the rails 41 in accordance with the rotation of the servo motor 46 via the slide guides 42.

Note that the rotational speeds and rotation timings of the respective gears installed in the above described first supply member 10, second supply member 20 and braider 30, the feed speed of the mandrel M by the servo motor 46 of the actuator 40, reciprocating movement of the mandrel M, and the like, are controlled by a personal computer (at least a control unit and a CPU that operates the control unit are installed therein) (not shown) connected to the servo motors (actuators) that drive these components in a wired or wireless manner.

Desired alignment angles of carbon fiber yarn are respectively stored in the personal computer for the first yarn arrangement layer and the second yarn arrangement layer. The feed speed of the mandrel M and the rotational speeds of the first supply member 10 and second supply member 20 for achieving these alignment angles are calculated. Furthermore, the start timings, and the like, of rotations of the servo motors that operate the supply members and the braider are set. Then, the movement control and rotation control of the actuators are executed on the basis of the calculated results.

A yarn layer forming method that uses the yarn layer forming apparatus 100 to form a layer structure of a yarn arrangement layer formed by the first supply member 10, a yarn arrangement layer formed by the second supply member 20 and a woven layer formed by the braider 30 on the peripheral surface of the mandrel M will be schematically described.

Ends of carbon fiber yarns S1 drawn out from the bobbins 11 of the first supply member 10, ends of carbon fiber yarns S2 drawn out from the bobbins 21 of the second supply member 20 and ends of braider yarns S3 drawn out from the bobbins 31 of the braider 30 are bonded to the front end of the mandrel M in a direction in which the mandrel M is moved, and then the mandrel M is moved at a predetermined speed.

In accordance with the movement of the mandrel M, for example, the first supply member 10 is initially controlled for rotation to form a first yarn arrangement layer in which the carbon fiber yarns S1 are aligned in a positive 45 degree direction with respect to the axial direction of the mandrel M on the peripheral surface of the mandrel M, and, to follow this operation, the second supply member 20 is controlled for rotation to form a second yarn arrangement layer in which the carbon fiber yarns S2 are aligned in a negative 45 degree direction on the first yarn arrangement layer.

In addition, subsequent to the operation of the second supply member 20, the gears of the braider 30 are operated to control the bobbins 31 for movement to thereby form a woven layer in which the braider yarns S3 are woven outside the second yarn arrangement layer. Note that, in FIG. 1A and FIG. 1B, the layer structure of the first yarn arrangement layer, the second yarn arrangement layer and the woven layer is formed as the mandrel M is moved from the right side to the left side once; however, when the mandrel M is returned to the right side and then moved from the right side to the left side again while carrying out the same operation, it is possible to form a further multilayer structure.

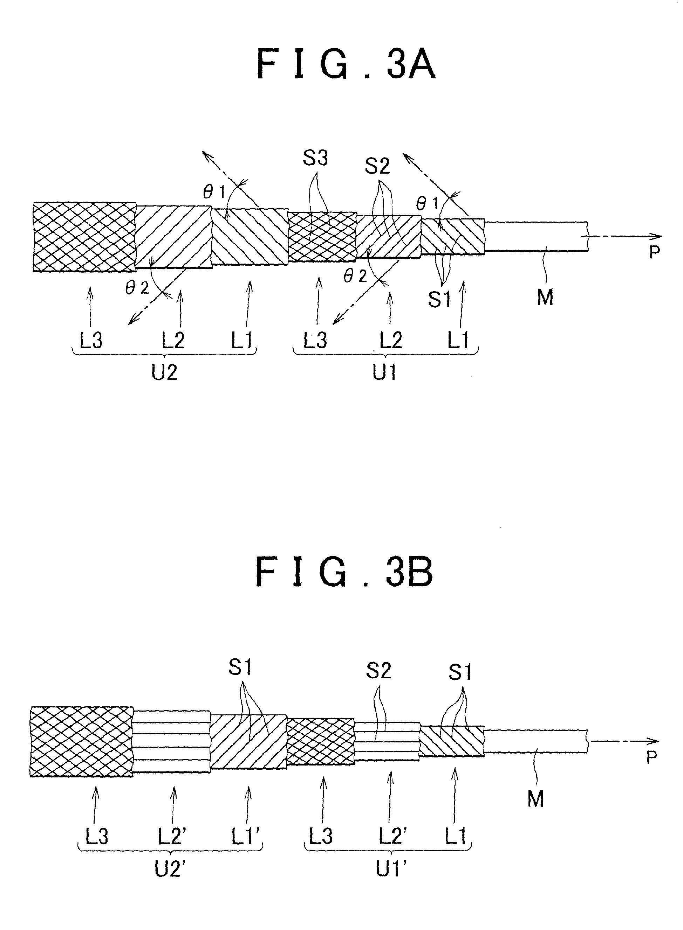

FIG. 3A and FIG. 3B are schematic views that illustrate embodiments of the layer structure of the yarn arrangement layers and woven layer that are formed on the peripheral surface of the mandrel. For easy illustration, the drawings show the layers that are cut away at midpoints to allow the inner layers to be visually recognized. Note that, other than the embodiments shown in FIG. 3A and FIG. 3B, a combination of the alignment directions of the first and second yarn arrangement layers that constitute the respective layer units, the number of layer units, and the like, may be selectively set.

In the embodiment shown in FIG. 3A, a first layer unit U1 is formed, and a second layer unit U2 is formed on the first layer unit U1. The first layer unit U1 is formed of, in the order from the peripheral surface of the mandrel M, a first yarn arrangement layer L1 that is aligned in a θ1 (for example, positive 45 degree) direction with respect to the axial direction P, a second yarn arrangement layer L2 that is aligned in a 82 (for example, negative 45 degree) direction and a woven layer L3. The second layer unit U2 is formed of a first yarn arrangement layer L1 that is aligned in the positive 45 degree direction, a second yarn arrangement layer L2 that is aligned in the negative 45 degree direction and a woven layer L3.

On the other hand, FIG. 3B shows the embodiment in which a first layer unit U1' is formed and, subsequently, a second layer unit U2' is formed on the first layer unit U1'. The first layer unit U1' is formed of, in the order from the peripheral surface of the mandrel M, a first yarn arrangement layer L1 that is aligned in a positive 45 degree direction with respect to the axial direction P of the mandrel M, a second yarn arrangement layer L2' that is aligned in a 0 degree direction (axial direction) and a woven layer L3. The second layer unit U2' is formed of a first yarn arrangement layer L1' that is aligned in a negative 45 direction, a second yarns arrangement layer L2' that is aligned in the 0 degree direction (axial direction) and a woven layer L3.

An intermediate element is formed so that yarn arrangement layers and woven layers are desirably aligned in a desirable number of layers formed on the peripheral surface of the mandrel M. The intermediate element is then placed in a mold die (not shown), and injection molding, typically, an RTM method, is carried out to impregnate and cure epoxy resin, or the like, in the yarn arrangement layers and the woven layers. In this manner, a carbon fiber-reinforced plastic (CFRP) is manufactured.

Note that, in the RTM method according to the related art, in which the cavity of a mold die is placed in a vacuum atmosphere while being filled with injected resin, such as epoxy resin, to perform pressure molding, it is applicable that, prior to vacuuming the cavity, a balloon or a large number of beads are put inside the mandrel to apply internal pressure.

With the layer structure of the yarn arrangement layers and the woven layers formed by the above yarn layer forming method, the yarn arrangement layers, which have no waviness that easily occurs in the woven layers, are formed on the peripheral surface of the mandrel M. Thus, the carbon fiber yarn layers have no weak portion in terms of strength. Hence, it is possible to manufacture a carbon fiber-reinforced plastic that has high strength characteristics, such as bending strength, tensile strength, torsional strength and shearing strength.

Furthermore, it is difficult to hold the arrangement on the peripheral surface of the mandrel only by the yarn arrangement layers. However, the woven layer that presses the yarn arrangement layers from the outside of the yarn arrangement layers is formed, so it is possible to desirably maintain the arrangement of the yarn arrangement layers.

The embodiment of the invention is described in detail with reference to the accompanying drawings; however, a specific configuration is not limited to the above embodiment. The aspects of the invention also encompass modifications, and the like, without departing from the scope of the invention.

## Claims

1. A yarn layer forming apparatus **characterized by** comprising:
an annular braider (30) that supplies braider yarn (S3);
annular first supply means (10) that is arranged at a distance from the braider (30) and that supplies first yarn (S1);
annular second supply means (20) that is arranged at a distance from the first supply means (10) and that supplies second yarn (S2); and
actuating means (40) that moves a mandrel (M) inside the braider (30) and inside the first and second supply means (10 and 20), wherein
at least one of the first supply means (10) and the second supply means (20) is rotatable, and
rotation of the at least any one of the first supply means (10) and the second supply means (20) and movement of the mandrel (M) are controlled to form a layer structure of yarn layers on a peripheral surface of the mandrel (M), wherein the layer structure of yarn layers includes at least first and second yarn arrangement layers (L1 and L2) formed respectively by the first supply means (10) and the second supply means (20) and a woven layer (L3) formed by the braider (30).

2. The yarn layer forming apparatus according to claim 1, wherein
the first supply means (10) stops or rotates to arrange the first yarn (S1) on the peripheral surface of the mandrel (M) in an axial direction of the mandrel (M) or in a direction inclined with respect to the axial direction to form the first yarn arrangement layer (L1),
the second supply means (20) stops or rotates to arrange the second yarn (S2) on the peripheral surface of the mandrel (M) in the axial direction of the mandrel (M) or in a direction inclined with respect to the axial direction to form the second yarn arrangement layer (L2) on the first yarn arrangement layer (L1), and
the braider (30) is driven to form the woven layer (L3) on the second yarn arrangement layer (L2).

3. A yarn layer forming method that uses a yarn layer forming apparatus that includes
an annular braider (30) that supplies braider yarn (S3);
annular first supply means (10) that is arranged at a distance from the braider (30) and that supplies first yarn (S1);
annular second supply means (20) that is arranged at a distance from the first supply means (10) and that supplies second yarn (S2); and
actuating means (40) that moves a mandrel (M) inside the braider (30) and inside the first and second supply means (10 and 20), wherein
at least one of the first supply means (10) and the second supply means (20) is rotatable, whereby multiple yarn layers (L1, L2 and L3) formed on a peripheral surface of a mandrel (M), the yarn layer forming method **characterized by** comprising:
performing a first step of stopping or rotating the first supply means (10) while moving the mandrel (M) by the actuator (40) to arrange the first yarn (S1) on the peripheral surface of the mandrel (M) in an axial direction of the mandrel (M) or in a direction inclined with respect to the axial direction to form a first yarn arrangement layer (L1);
performing a second step of stopping or rotating the second supply means (20) to arrange the second yarn (S2) on the peripheral surface of the mandrel (M) in the axial direction of the mandrel (M) or in a direction inclined with respect to the axial direction to form a second yarn arrangement layer (L2) on the first yarn arrangement layer (L1); and
performing a third step of driving the braider (30) to form a woven layer (L3) on the second yarn arrangement layer (L2).

4. The yarn layer forming method according to claim 3, wherein a combination of fiber directions of the first yarn arrangement layer (L1) and the second yarn arrangement layer (L2) on the mandrel (M) is a combination of a positive 45 degree direction and a negative 45 degree direction with respect to the axial direction of the mandrel (M).

5. The yarn layer forming method according to claim 3, wherein a combination of fiber directions of the first yarn arrangement layer (L1) and the second yarn arrangement layer (L2) on the mandrel (M) is a combination in which one of the fiber directions is the positive 45 degree direction and the other one of the fiber directions is a 0 degree direction with respect to the axial direction of the mandrel (M).

6. The yarn layer forming method according to claim 3, wherein a combination of fiber directions of the first yarn arrangement layer (L1) and the second yarn arrangement layer (L2) on the mandrel (M) is a combination in which both are 0 degree directions with respect to the axial direction of the mandrel (M).

7. The yarn layer forming method according to any one of claims 3 to 6, wherein, when the first step to the third step are regarded as one set, two or more sets are performed to form a layer structure (U1 and U2) of the yarn layers (L1, L2 and L3) on the peripheral surface of the mandrel (M).

8. A method of manufacturing a fiber-reinforced member, **characterized by** comprising:
manufacturing an intermediate element that is formed of multiple yarn layers (L1, L2 and L3) formed on a peripheral surface of a mandrel (M) by the yarn layer forming method according to any one of claims 3 to 7; and
placing the intermediate element in a mold die and then undergoing injection molding to manufacture the fiber-reinforced member.

9. The method of manufacturing a fiber-reinforced member according to claim 8, wherein the mandrel is constructed by a water-soluble material,
the method further comprising dissolving the mandrel by immersing the injection molded intermediate element in a water.
